# EUROPEAN PATENT SPECIFICATION

(11) **EP 2 497 943 B1**
(45) Date of publication and mention of the grant of the patent: **04.12.2013**
(21) Application number: 11157898.5
(22) Date of filing: 11.03.2011
(51) Int. Cl.: F03D 1/06, B32B 27/00, F03D 11/00

(54) **Wind turbine blade with an improved surface**
Rotorblatt einer Windenergieanlage mit einer verbesserten Oberfläche
Pale d'éolienne avec une surface améliorée

(43) Date of publication of application: 12.09.2012
(73) Proprietor: Siemens Aktiengesellschaft, 80333 München (DE)
(72) Inventor: Lind, Soeren Oemann, 4700, Næstved (DK); Stege, Jason, 7330, Brande (DK)

(56) References cited:
- WO-A1-2008/157013
- WO-A1-2009/118545
- DE-U1-202009 006 966
- US-A1- 2008 181 775
- US-A1- 2009 220 726

## Description

The invention relates to a wind turbine blade with an improved surface.

Offshore wind turbines and wind turbines, which are located at sites with a cold climate, needs to be protected against influences from the ambient, like ice for example, and even needs to be protected against erosion.

Especially the blades of the wind turbine need to be protected against icing. Otherwise the aerodynamic characteristics of the blades are reduced significantly and the output-power of the wind turbine is reduced.

It is known to heat the blade(s) for de-icing. This can be done by an electrical power source and by connected heating-wires, which are integrated into the blade-surface for example. Even hot or warm air may be used for de-icing. The air is brought into cavities of the blade for example and may be generated by help of wind-turbine components.

Especially the leading edge of the blade is prone to erosion, thus the surface of the blade is harmed step by step over the live-time of the wind turbine. A harmed blade surface allows ice to grow and expand there significantly.

The erosion of the blade surface is mainly caused by particles of dirt, which are blown by the wind with high velocity and which thus attack the turning blades significantly.

The erosion of the blade surface is also caused by bird-strikes, bat-strikes, frost, salt (at offshore sites), rain, insects and even by long-term loads acting on the blade.

Long-term loads may lead to hair-line cracks, which are points of attack for salt and/or ice, etc.

Document US 2008/0181775 A1 discloses an improved blade in view to erosion, lightning and icing. The leading edge of the blade includes a frontal surface and an erosion shield. The shield is positioned externally at the frontal surface of the blade. A heat generating element is positioned between the shield and the frontal surface for its fixation during the blade-manufacturing-process. This solution is complicated and is even expensive.

Document DE 20 2009 006 966 U1 discloses a plastic composite part, which is useful e.g. as impact protecting material at a tail of a blade of an aircraft. The plastic composite part comprises two layers, wherein the first layer comprises a thermosetting resin layer and wherein the second layer comprises elastomerics, while both layers are combined.

Document WO 2008 157 013 A1 discloses a "METHOD AND COATING FOR PROTECTING AND REPAIRING AN AIRFOIL SURFACE USING MOLDED BOOTS, SHEET OR TAPE". Damages aside the blade surface are repaired by attaching a so called "flexible applicator" which is made of a 0.25mm thick and high density polyethylene sheet.

Document US 2009 0220 726 A1 discloses a "CONDUCTIVE SEAM COVER TAPE" which is used for so called "lighter-than-air" vehicles. The conductive seam cover tape can be used to protect and/or cover one or more seams in the lighter-than-air vehicle.

It is the aim of the present invention, to provide a wind turbine blade with an improved surface to avoid erosion there.

This aim is reached by the features of the independent claim. Preferred configurations of the invention are object of the dependent claims.

According to the invention a special designed plastic tape is placed at specific locations of the blade-surface.

The specific locations are known to be difficult in view to erosion and thus needs to be reinforced to withstand ambient influences in a better way.

In a preferred configuration the plastic tape is placed along the leading edge of the blade as this area is known to be challenged by erosion.

The plastic tape invented comprises carbon fibers, which are used for reinforcement purposes of the tape.

The carbon fibers are used as carrier for further components of the plastic tape.Thus the carrier forms a first layer within a tape-sandwich structure.

In a preferred configuration the first layer or carrier layer comprises a thermoplastic material additionally. The thermoplastic material may be made of PTFE, PVDF, PP or PET. The thermoplastic material may be used to connect and/or to guide and/or to support the carbon fibers.

The plastic tape comprises on a first side a second layer, which is connected with the carrier-layer or first layer.

The second layer comprises a so called "Polyvinylidene Fluoride, PVDF" preferable.

The "Polyvinylidene Fluoride, PVDF" are highly non-reactive and pure thermoplastic fluoropolymer.

In a preferred configuration the plastic tape comprises a third layer on a second side of the tape. The third layer is connected with the carrier-layer or first layer and is arranged opposite to the second layer.

Thus the second side of the tape is opposite to the first side of the tape.

The second side of the plastic tape is prepared to be connected with the blade to improve the blade surface.

This connection may be established by help of the additional third layer. The third layer is preferably connected with the blade by an adhesive applied. Due to the polyester or polyurethane the third layer is best suited for the adhesive-based connection.

It is also possible that the first layer or carrier layer is prepared to be connected with the blade surface by an adhesive applied. In this case the sandwich structure shows only two layers: the carrier-layer and the second layer, while the second layer faces to the ambient as blade-surface later.

In a preferred configuration the adhesive is a liquid adhesive.

As described above the plastic tape shows a sandwich structure.

The plastic tape is preferably made of three layers:
- the PVDF-layer or second layer, which forms a top layer and is aligned to the ambient, acting as blade-surface,
- the carrier-layer or first layer, which comprises the carbon fibers for reinforcement purposes, and
- the third layer, which comprises polyester or polyurethane as bottom layer of the tape.

The plastic tape may even be made of two layers:
- the PVDF-layer or second layer, which forms a top layer and is aligned to the ambient, acting as blade-surface, and
- the carrier-layer or first layer, which comprises the carbon fibers for reinforcement purposes.

Both alternatives may be preferably connected by a liquid adhesive to the blade.

Pure thermoplastic fluoropolymer like PVDF show a low surface tension and are thus extremely hard. Heat and pressure are used to connect the thermoplastic fluoropolymer material with the carbon fibers preferably.

In a preferred configuration the plastic tape is arranged within the mould to become an integrated part of the blade-surface.

The mould is preferably used within a "Vacuum Assisted Resin Transfer Mould, VARTM"-process. Thus the tape is arranged inside the mould before a matrix material like resin, etc., is applied. The tape is arranged within the mould before the blade is casted or manufactured.

This procedure is quite simple and needs nearly no additional time for the working-personnel. Thus its positioning is quite cheap in view to the prior art.

The tape "grinds" or smoothes the surface of the casted blade. Thus less time is needed for finishing-work and repair-work after the blade-casting-process is finished.

The integrated plastic tape especially improves the blade surface in view to icing, as the resulting blade-surface is quite smooth. Thus the "grow up" of ice is reduced or even avoided at locations where the tape is arranged.

The layers of the plastic tape are preferably made by the help of a "rolling system".

For example the first layer or carrier layer comprises a thermoplastic material, shaped as a plastic tape preferably.

The thermoplastic material may be made of PTFE, PVDF, PP or PET.

The thermoplastic material is heated close to its melting point. Next carbon fibers are pressed halfway into the heated thermoplastic material by help of rollers.

Thus the plastic material and the carbon fibers build up the first layer or carrier-layer preferably.

The other half-part of carbon fibers projects from the surface thus this part may be used to be connected with the pure thermoplastic fluoropolymer applied.

It is even possible to use a resin-based system to build up the layered plastic tape, for example a pultrusion-system. The carbon fiber is dipped in resin and is passed through rollers to a template continuously while the resin cures.

It is even possible to attach the plastic tape towards the blade afterwards. After the reinforced plastic tape is made it can be attached to the blade surface using a pressure sensitive adhesive or a traditional adhesive for example. Even various types of "hot melt adhesives" are possible for this purpose.

The plastic tape with the carbon fiber show a higher melting point in comparison to "hot melt adhesives" used. This allows the tape to be heated (externally or by a current being applied to the carbon fiber) without damaging the material until a usable temperature for the adhesive is reached.

The invention is shown in more detail by help of figures.

The figures are only examples of preferred configurations and do not limit the scope of the invention claimed.
FIG 1 shows a blade surface with a first tape according to the invention and in a cross-sectional view,
FIG 2 shows a blade surface with a second tape according to the invention and in a cross-sectional view, and
FIG 3 shows a preferred position of the tape on a wind turbine blade.

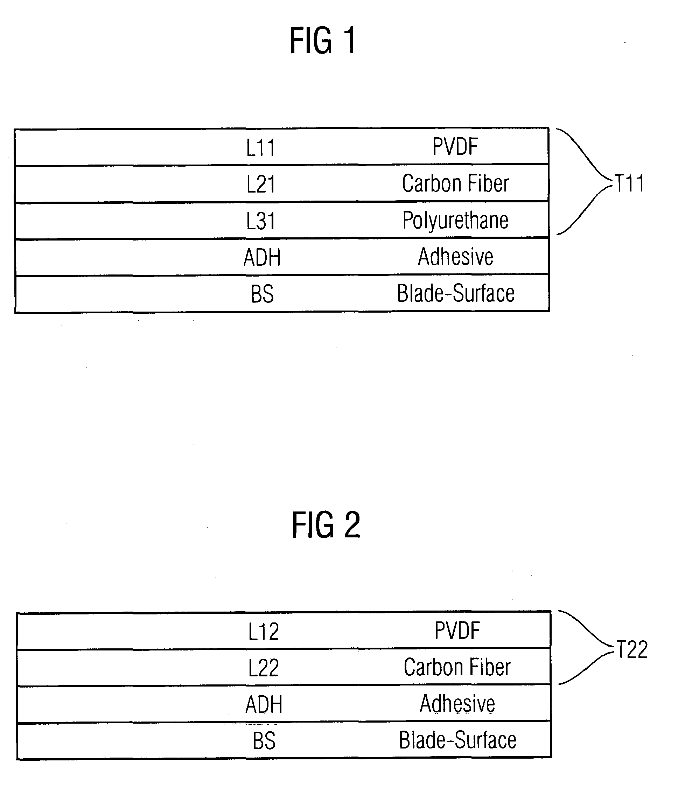

FIG 1 shows a blade surface BS with a first tape T11 according to the invention.

The tape T11 shows a sandwich-structure and comprises three layers L11, L21, L31.

The layer L11 comprises PVDF as described above. Thus the layer L11 is part of a first side of the tape T11.

The layer L11 is connected with a carrier-layer L21. The carrier-layer L21 comprises carbon fibers for reinforcement purposes.

The carrier layer L21 is connected with a layer L31. The layer L31 comprises Polyurethan. Thus the layer L21 is part of a second side of the tape T11, which is opposite to the first side.

The tape T11 is connected with the blade surface BS by an adhesive ADH, which is applied between the tape T11 and the blade surface BS.

FIG 2 shows a blade surface BS with a second tape T22 according to the invention.

The tape T22 comprises only two layers L12 and L22. The top layer L12 comprises PVDF as described above.

The top layer L12 is connected with a carrier-layer L22. The carrier layer L22 comprises carbon fibers for reinforcement purposes.

The tape T22 is connected with the blade surface BS by an adhesive ADH, which is applied between the tape T22 and the blade surface BS.

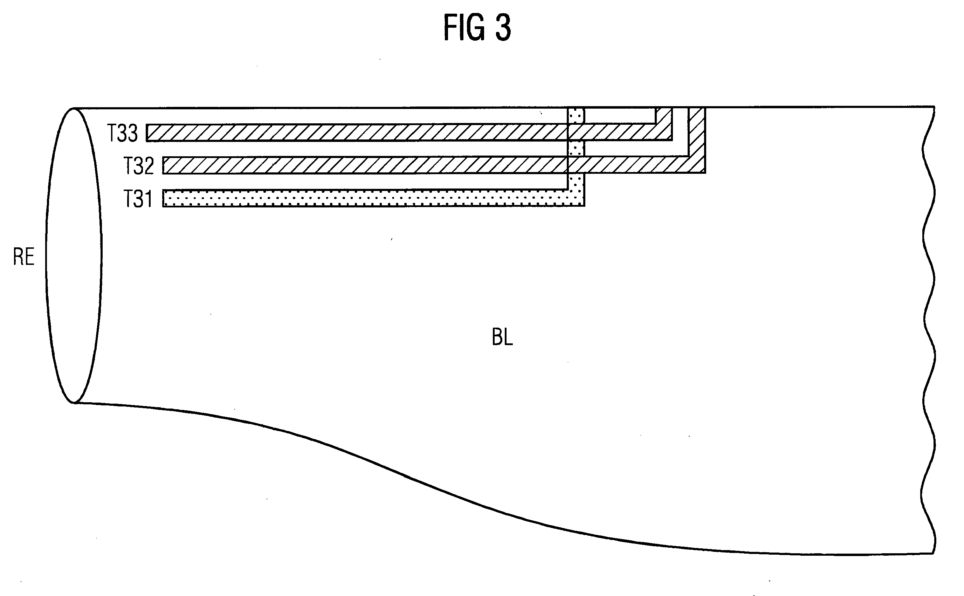

FIG 3 shows a preferred position of tapes invented close to a root-end RE of a blade BL.

The three tapes T31, T32 and T33 show the sandwich-structure according to the invention.

The tapes T31, T32 and T33 are connected with the blade BL and thus are aligned to the ambient of the blade acting as improved blade-surface there.

For best practice the tapes T31, T32 and T33 cross each other at certain points, but they are not connected among each other at those points. Thus the tape T31 is arranged below the tapes T32 and T33 without "short-circuit" with them.

## Claims

1. Wind turbine blade (BL) with an improved surface,
- wherein a plastic tape (T11, T22) is arranged at specific locations of the blade to reinforce the blade-surface (BS) there,
- wherein the plastic tape (T11, T22) comprises a sandwich structure with at least two layers,
- wherein a first layer (L21, L22) of the plastic tape (T11, T22) comprises carbon fibers, while the carbon fibers are used for the reinforcement purposes of the tape,
- **characterized in that** a second layer (L11, L12) of the plastic tape (T11, T22) comprises Polyvinylidene Fluoride (PVDF) as pure thermoplastic fluoropolymer,
- wherein the second layer (L11, L12), which is the first side of the tape (T11, T22), is aligned to the ambient of the blade on the one hand and wherein the second layer (L11, L12) is connected with the first layer (L21, L22) on the other hand, and
- wherein a second side of the tape, which is arranged opposite to the first side of the tape, is connected with the blade (BL) by an adhesive (ADH).

2. Wind turbine blade (BL) according to claim 1,
- wherein the plastic tape (T11) comprises a third layer (L31),
- wherein the third layer (L31) comprises Polyurethan,
- wherein the third layer (L31) is the second side of the tape, thus the third layer (L31) is connected with the blade (BL) by the adhesive (ADH) on the one hand, and
- wherein the third layer (L31) is connected with the first layer (L21) on the other hand.

3. Wind turbine blade (BL) according to claim 1, wherein the first layer (L22) is the second side of the tape, thus the first layer (L22) is connected with the blade (BL) by the adhesive (ADH).

4. Wind turbine blade (BL) according to one of the claims 1 to 3, wherein the adhesive (ADH) is a liquid adhesive.

5. Wind turbine blade (BL) according to one of the claims 1 to 4,
- wherein the plastic tape (T11, T22) is arranged within a mould,
- wherein the mould is prepared and arranged to be used within a vacuum assisted resin transfer mould process,
- wherein the tape is arranged inside the mould before a matrix material of the vacuum assisted resin transfer mould process is applied to cast the blade,
- thus the plastic tape (T11, T22) becomes an integrated part of the blade-surface due to the applied vacuum assisted resin transfer mould process.

6. Wind turbine blade (BL) according to one of the claims 1 to 5, wherein the first layer (L21, L22) and the second layer (L11, L12) are connected by applied heat and/or pressure.

7. Wind turbine blade (BL) according to one of the claims 1 to 6, wherein the plastic tape (T11, T22) is arranged at locations of the blade (BL) where ambient influence leads to erosion there.

8. Wind turbine blade (BL) according to claim 7, wherein the plastic tape (T11, T22) is arranged close to and/or along the surface of the leading edge of the blade (BL).

## Patentansprüche

1. Windenergieanlagen-Rotorblatt (BL) mit einer verbesserten Oberfläche,
- wobei ein Kunststoffband (T11, T22) an spezifischen Stellen des Rotorblattes angeordnet ist, um dort die Rotorblattoberfläche (BS) zu verstärken,
- wobei das Kunststoffband (T11, T22) eine Sandwichstruktur mit mindestens zwei Schichten umfasst,
- wobei eine erste Schicht (L21, L22) des Kunststoffbandes (T11, T22) Kohlefasern umfasst, wobei die Kohlefasern für die Verstärkungszwecke des Bandes verwendet werden,
- **dadurch gekennzeichnet, dass** eine zweite Schicht (L11, L12) des Kunststoffbandes (T11, T22) Polyvinylidenfluorid (PVDF) als reines thermoplastisches Fluorpolymer umfasst,
- wobei die zweite Schicht (L11, L12), welche die erste Seite des Bandes (T11, T22) ist, einerseits an die Umgebung des Rotorblattes angepasst ist und wobei die zweite Schicht (L11, L12) andererseits mit der ersten Schicht (L21, L22) verbunden ist und
- wobei eine zweite Seite des Bandes, welche gegenüber der ersten Seite des Bandes angeordnet ist, mit dem Rotorblatt (BL) durch einen Klebstoff (ADH) verbunden ist.

2. Windenergieanlagen-Rotorblatt (BL) nach Anspruch 1,
- wobei das Kunststoffband (T11) eine dritte Schicht (L31) umfasst,
- wobei die dritte Schicht (L31) Polyurethan umfasst,
- wobei die dritte Schicht (L31) die zweite Seite des Bandes ist, sodass die dritte Schicht (L31) einerseits mit dem Rotorblatt (BL) durch den Klebstoff (ADH) verbunden ist und
- wobei die dritte Schicht (L31) andererseits mit der ersten Schicht (L21) verbunden ist.

3. Windenergieanlagen-Rotorblatt (BL) nach Anspruch 1, wobei die erste Schicht (L22) die zweite Seite des Bandes ist, sodass die erste Schicht (L22) mit dem Rotorblatt (BL) durch den Klebstoff (ADH) verbunden ist.

4. Windenergieanlagen-Rotorblatt (BL) nach einem der Ansprüche 1 bis 3, wobei der Klebstoff (ADH) ein Flüssigklebstoff ist.

5. Windenergieanlagen-Rotorblatt (BL) nach einem der Ansprüche 1 bis 4,
- wobei das Kunststoffband (T11, T22) innerhalb einer Form angeordnet ist,
- wobei die Form dafür vorbereitet und ausgebildet ist, in einem Prozess des vakuumunterstützten Harzspritzpressens verwendet zu werden,
- wobei das Band innerhalb der Form angeordnet wird, bevor ein Matrixmaterial des Prozesses des vakuumunterstützten Harzspritzpressens aufgebracht wird, um das Rotorblatt zu gießen,
- sodass das Kunststoffband (T11, T22) aufgrund des angewendeten Prozesses des vakuumunterstützten Harzspritzpressens zu einem integralen Bestandteil der Rotorblattoberfläche wird.

6. Windenergieanlagen-Rotorblatt (BL) nach einem der Ansprüche 1 bis 5, wobei die erste Schicht (L21, L22) und die zweite Schicht (L11, L12) durch zugeführte Wärme und/oder angewendeten Druck verbunden sind.

7. Windenergieanlagen-Rotorblatt (BL) nach einem der Ansprüche 1 bis 6, wobei das Kunststoffband (T11, T22) an Stellen des Rotorblattes (BL) angeordnet ist, wo Umgebungseinflüsse zu Erosion führen.

8. Windenergieanlagen-Rotorblatt (BL) nach Anspruch 7, wobei das Kunststoffband (T11, T22) nahe und/oder entlang der Oberfläche der Vorderkante des Rotorblattes (BL) angeordnet ist.

## Revendications

1. Une pale de turbine éolienne (BL) avec une surface améliorée,
- dans laquelle un ruban en plastique (T11, T22) est agencé à des emplacements spécifiques de la pale de façon à y renforcer la surface de pale (BS),
- dans laquelle le ruban en plastique (T11, T22) comprend une structure en sandwich avec au moins deux couches,
- dans laquelle la première couche (L21, L22) du ruban en plastique (T11, T22) contient des fibres de carbone, lesdites fibres de carbones étant utilisées à des fins de renforcement du ruban,
- **caractérisée en ce qu'**une deuxième couche (L11, L12) du ruban en plastique (T11, T22) contient du polyfluorure de vinylidène (PVDF) en tant que fluoropolymère thermoplastique pur,
- dans laquelle la deuxième couche (L11, L12), qui est la première face du ruban (T11, T22), est alignée avec l'environnement de la pale d'une part, et dans laquelle la deuxième couche (L11, L12) est raccordée à la première couche (L21, L22) d'autre part, et
- dans laquelle une deuxième face du ruban, qui est agencée à l'opposée de la première face du ruban, est raccordée à la pale (BL) par un adhésif (ADH).

2. La pale de turbine éolienne (BL) selon la revendication 1,
- dans laquelle le ruban en plastique (T11) comprend une troisième couche (L31),
- dans laquelle la troisième couche (L31) contient du polyuréthane,
- dans laquelle la troisième couche (L31) est la deuxième face du ruban, et ainsi la troisième couche (L31) est raccordée à la pale (BL) par l'adhésif (ADH) d'une part, et
- dans laquelle la troisième couche (L31) est raccordée à la première couche (L21) d'autre part.

3. La pale de turbine éolienne (BL) selon la revendication 1, dans laquelle la première couche (L22) est la deuxième face du ruban, et ainsi la première couche (L22) est raccordée à la pale (BL) par l'adhésif (ADH).

4. La pale de turbine éolienne (BL) selon l'une quelconque des revendications 1 à 3, dans laquelle l'adhésif (ADH) est un adhésif liquide.

5. La pale de turbine éolienne (BL) selon l'une quelconque des revendications 1 à 4,
- dans laquelle le ruban en plastique (T11, T22) est agencé à l'intérieur d'un moule,
- dans laquelle le moule est préparé et agencé de façon à être utilisé dans un processus de moulage par transfert de résine sous vide,
- dans laquelle le ruban est agencé à l'intérieur du moule avant qu'un matériau de matrice du processus de moulage par transfert de résine sous vide ne soit appliqué de façon à couler la pale,
- ainsi le ruban en plastique (T11, T22) devient une partie intégrante de la surface de la pale du fait du processus de moulage par transfert de résine sous vide appliqué.

6. La pale de turbine éolienne (BL) selon l'une quelconque des revendications 1 à 5, dans laquelle la première couche (L21, L22) et la deuxième couche (L11, L12) sont raccordées par une chaleur et/ou une pression appliquée.

7. La pale de turbine éolienne (BL) selon l'une quelconque des revendications 1 à 6, dans laquelle le ruban en plastique (T11, T22) est agencé à des emplacements de la pale (BL) dans lesquels une influence ambiante conduit à une érosion à ces emplacements.

8. La pale de turbine éolienne (BL) selon la revendication 7, dans laquelle le ruban en plastique (T11, T22) est agencé à proximité et/ou le long de la surface du bord d'attaque de la pale (BL).
